# EUROPEAN PATENT APPLICATION

(11) **EP 3 581 381 A1**
(43) Date of publication of application: **18.12.2019**
(21) Application number: 19382406.7
(22) Date of filing: 21.05.2019
(51) Int. Cl.: B41F 13/58, B41F 19/00, B41J 3/44, B26D 1/00, B26D 7/00

(54) **CUTTING MACHINE FOR CUTTING SHEETS OF CARDBOARD, PAPER OR THE LIKE AND DIGITAL PRINTING LINE**

(30) Priority: 14.06.2018 ES 201830908 U
(71) Applicant: Comercial Industrial Maquinaria Carton Ondulado, S. L., 08760 Barcelona (ES)
(72) Inventor: SERRA OBIOL, Ramon, 08760 Martorell (ES); PUIG VARGAS, Jordi, 08760 Martorell (ES)
(74) Representative: Isern-Jara, Nuria

(57) **Abstract**

The invention relates to a cutting machine for cutting cardboard, paper or the like, comprising an aligning station (1) having a horizontal bedplate (2) provided with sheet shifting means and stop means arranged along the forward movement direction of the sheet and configured for being in contact with one of the sides of the sheet for guiding the movement for shifting the sheet (100). Additionally, the machine comprises a cutting station (11) provided with cutting means (12) arranged in a transverse direction with respect to the forward movement direction (F) of the sheets for dividing the sheets into longitudinal sections, and sheet shifting means for shifting the sheets in the forward movement direction which coincides with a longitudinal axis of the cutting station (11), said cutting means being provided for dividing each sheet into portions, a longitudinal axis of the bedplate (2) of the aligning station (1) having, when seen in plan view, an angle of inclination with respect to the longitudinal axis of the cutting station.

## Description

### SPECIFICATION

### OBJECT OF THE INVENTION

The object of the present application is the registration of a cutting machine for cutting cardboard, paper or the like as well as a digital printing line for printing sheets of cardboard, paper or the like.

More specifically, the invention proposes the development of a cutting machine for cutting cardboard, paper or the like to be used in a digital printing line which allows cutting the sheets of cardboard after they are printed.

### BACKGROUND OF THE INVENTION

Digital printing is used on an increasingly more frequent basis today for printing on sheet elements, such as sheets of cardboard, for example. It has been verified that digital printing presents a number of advantages compared to traditional flexographic printing, although in relation to productivity aspects, digital printing still rates lower.

To increase productivity, there are double feeders on the market which supply two sheets of cardboard in parallel to the digital printing machine. The width of the machine is thereby taken full advantage of, where most of the print heads are also working. While this solution is quite suitable in the field of digital printing, in practice it has been observed that it presents the drawback described below.

The conveyance of sheets of cardboard on the entire printing line is usually done by vacuum belts. When a feeder device supplies two sheets (corresponding to two boxes) in parallel for technical reasons, it inevitably does so by leaving a space between them. Despite the fact that the space has small dimensions, small streams of air are produced through said space due to the very vacuum system of the conveyor belt, which causes the deviation of ink microdrops projected by the head due to the air stream for printing the edges closest to the groove existing between the two sheets.

Furthermore, the applicant does not currently know of an invention that has all the characteristics described in this specification.

### DESCRIPTION OF THE INVENTION

The present invention has been developed with the aim of providing a cutting machine which is configured as a novelty within the field of application and solves the previously drawbacks, also contributing other additional advantages that will be obvious from the description below.

Therefore, an object of the present invention is to provide a cutting machine for cutting cardboard, paper or the like, characterised by comprising:
- an aligning station having a horizontal bedplate provided with sheet shifting means and stop means arranged along the forward movement direction of the sheet and configured for being in contact with one of the sides of the sheet for guiding the movement for shifting the sheet;
- a cutting station provided with cutting means arranged in a transverse direction with respect to the forward movement direction of the sheets for dividing the sheets into longitudinal sections, and sheet shifting means for shifting the sheets in the forward movement direction which coincides with a longitudinal axis of the cutting station, said cutting means being provided for dividing each sheet into portions.

A longitudinal axis of the horizontal bedplate of the aligning station has, when seen in plan view, an angle of inclination with respect to the longitudinal axis of the cutting station.

The arrangement of the aligning station ensures that the cut is made precisely right before the arrangement of the cutting means. The fact that the bedplate is slightly turned (when seen in plan view) and the presence of the stop means ensures that the sheets of cardboard are perfectly aligned in their forward movement direction as well as in the correct transverse position before being cut longitudinally.

An objective of the invention is to provide a machine which allows introducing a whole sheet, for example, having twice the width as the format to be printed and after printed with the motifs thereon, in parallel, longitudinally cutting it.

According to the invention, the cutting means comprise a plurality of motor-driven circular cutting blades spaced from one another, being arranged in cantilever fashion on a support structure. Such blades can be shifted through the support structure such that their position allows adapting to the format of the sheet to be cut.

Preferably, the shifting means present in the cutting station comprise a plurality of vacuum belts oriented in a forward movement direction which coincides with the longitudinal axis of the cutting station.

According to another aspect of the invention, each cutting blade is located between two vacuum belts which perform the function of driving the sheet when making the longitudinal cut. Therefore, drive cylinders are dispensed with, which prevents the production of a laminating effect on cardboard as well as defects in the printing itself.

Advantageously, each of the cutting blades includes a tilting system following an upward/downward vertical movement of the cutting blade or separating the cutting blade from the sheet of cardboard in the event that a longitudinal cut is not desired.

According to another feature of the machine of the invention, the cutting station includes a sheet ejector transfer located after the cutting means. It is thereby possible to eject a sheet during normal operation, which on one hand allows thoroughly inspecting the printing of the sheet, and it allows on the other hand automatically discarding sheets which the digital printer has somehow discarded as defective.

In a preferred embodiment, the ejector transfer comprises at least one longitudinally arranged vacuum conveyor belt located above the passage of the sheets, a downwardly inclined ejection ramp located below the conveyor belt, and a diverter mechanism having at least one rotatably articulated ejector linked with the ejection ramp and the conveyor belt. Thereby, in a first position of the ejector it allows the passage of the sheets on a horizontal plane, whereas in a second position of the ejector which is turned with respect to the first position, it forces the sheets to be diverted in a downward direction towards the ejection ramp.

In another preferred embodiment of the invention, the sheet shifting means present in the aligning station comprise a motor-driven belt with an air vacuum assembled in the bedplate, the conveyor belt having a plurality of through holes through which the vacuum action is carried out, which prevents the creation of deformations on the face of the sheet of cardboard located face down.

According to another aspect of the invention, the bedplate of the aligning station is assembled on a movable guiding system which allows shifting the bedplate in a transverse direction with respect to the forward movement direction of the sheet being shifted by the horizontal bedplate. It is thereby possible to adjust the position of the stop means according to the sheet format as the bedplate can shift transversely on rails arranged perpendicularly with respect to the forward movement direction of the sheet.

In a preferred embodiment, the stop means comprises a fixed elongated barrier which is axially aligned with the forward movement direction of the sheets.

Another object of the invention is to provide a digital printing line for printing sheets of cardboard, paper or the like, comprising a digital printing station configured for printing, using digital technique, at least one of the sides of the sheet, characterised by the fact that it includes a cutting machine, like the one described above, which is arranged after the digital printing station in a forward movement direction, such that once a sheet is printed it then passes through the aligning station and cutting station.

In the printing line, a longitudinal axis of the digital printing station is inclined with respect to the longitudinal axis of the aligning station.

Other features and advantages of the cutting machine object of the present invention will become apparent from the description of a preferred but not exclusive embodiment illustrated by way of non-limiting example in the attached drawings, in which:

### BRIEF DESCRIPTION OF THE DRAWINGS

Figure 1 is a perspective view of the cutting machine according to the present invention;
Figure 2 is a detailed perspective view of the area indicated with discontinuous lines in Figure 1 where the cutting means present in the cutting station are located;
Figure 3 is a plan view of the cutting machine of the invention;

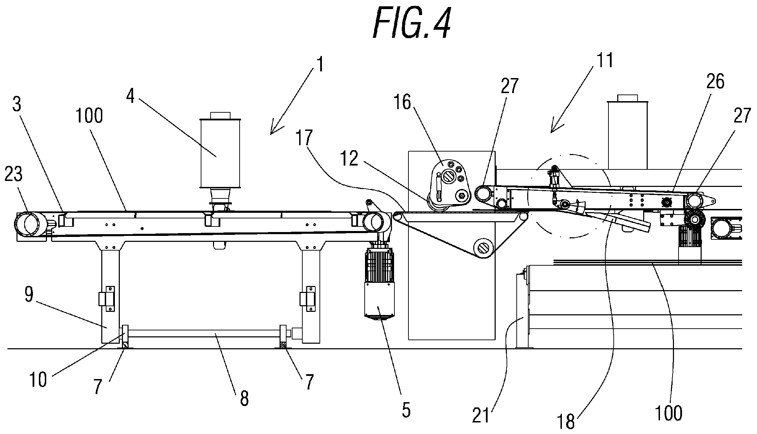

Figure 4 is a sectioned view of a part of the cutting machine of the invention along line A-A indicated in Figure 3; and
Figure 5 is an elevational view of a detail of the area where the sheet ejection transfer is located.

### DESCRIPTION OF A PREFERRED EMBODIMENT

In light of the aforementioned figures, and in accordance with the adopted numbering, one may observe therein an example of a preferred embodiment of the invention, which comprises the parts and elements indicated and described in detail below.

The cutting machine is provided for cutting sheets of cardboard, paper or the like, for making boxes, where it is particularly conceived for being assembled on a digital printing line, such that said machine is located at the outlet of a digital printer (not depicted).

More particularly, the machine comprises an aligning station, generally indicated with reference (1), having a bedplate (2) which is provided with sheet shifting means (100). As can be seen, the bedplate (2) of the aligning station is assembled on a movable guiding system which allows the shifting of the bedplate (2) in a transverse direction with respect to the forward movement direction of the sheet (100) being shifted by the horizontal bedplate.

The sheet shifting means present in the aligning station comprise a conveyor belt (3) with an air vacuum, having a plurality of through holes arranged along the horizontally arranged motor-driven conveyor belt (3) which is operated by a pulley system (23) linked to drive means (5) and an air vacuum system, generally indicated with reference (4).

Furthermore, stop means are provided in the aligning station (1) arranged along the forward movement direction of the sheet and configured for being in contact with one of the sides of the sheet which allows the guiding with respect to the movement for shifting the sheet of cardboard (100) when it moves in the forward movement direction, depicted by the arrow (F).

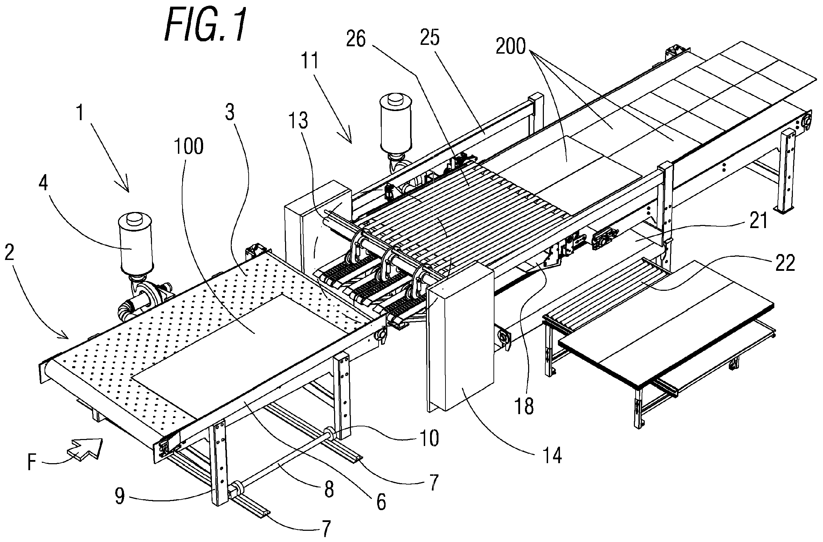

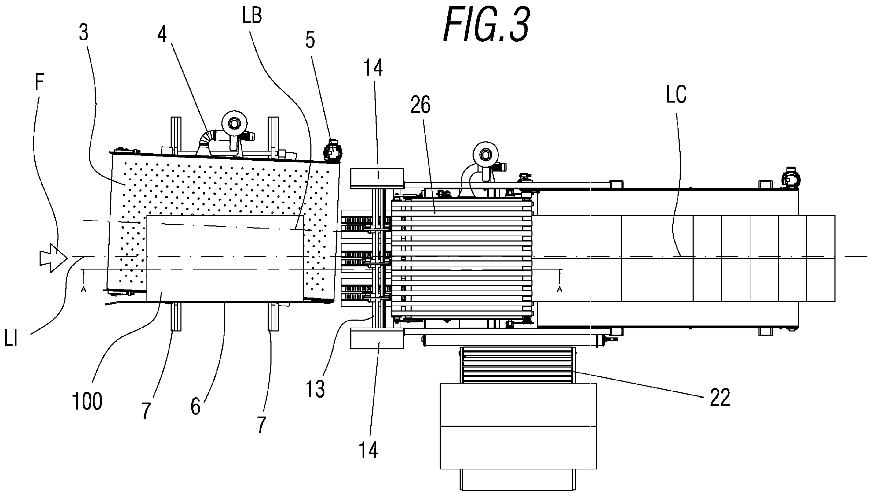

As can be observed in Figures 1 and 3 with greater clarity, the stop means comprise an elongated barrier (6) fixed in the bedplate (2) which is axially aligned with the forward movement direction of the sheets (100).

Going back to the aforementioned guiding system, it comprises a pair of rails (7) parallel to and separated from one another on which rolling means provided in the lower part of the bedplate slide. In this case, such rolling means consists of two wheel sets (only one of the sets can be seen in the drawings), each of them formed a shaft (8) fixed at the ends thereof to vertical legs (9) present in the bedplate (2), said shaft (8) including a pair of wheels (10) moving each of them along a corresponding rail (7).

Additionally, the machine includes adjacent to and after the aligning station (1) described above in the forward movement direction (F), a cutting station (11) provided with cutting means (which will be explained below) which are arranged in a transverse direction with respect to the forward movement direction (F) of the sheets (100) and allow dividing the sheets into smaller sheets (200) by making longitudinal cuts. The cutting station (11) is also provided with sheet shifting means (100) provided for shifting the sheets (100) in the forward movement direction (F) which coincides with a longitudinal axis (LC) of the cutting station.

It should particularly be mentioned that a longitudinal axis (LB) of the horizontal bedplate of the aligning station has, when seen in plan view, a slight angle of inclination with respect to the longitudinal axis (LC) of the cutting station (11).

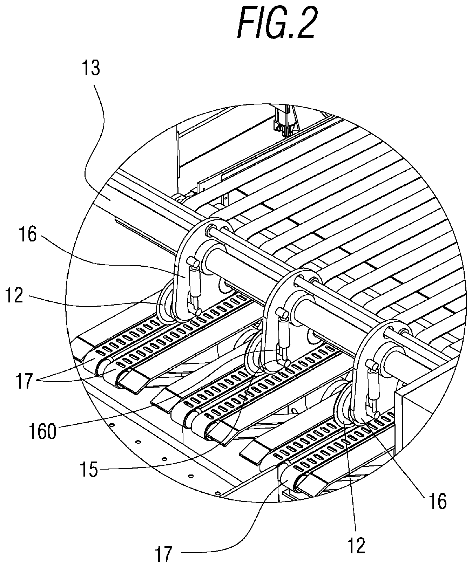

Now making particular reference to the cutting means, they comprise a plurality of circular cutting blades (12) each of which is motor-driven, spaced from one another, and arranged along a cross-member (13) in cantilever fashion supported on a support structure (14). Such cutting blades (12) can slide along the cross-member (13) to adapt to the dimensions of the sheets (100) to be cut. As can be seen in further detail in Figure 2, each of the cutting blades (12) includes a tilting system to absorb a vertical movement of the cutting blade or to regulate the height of the cutting blade (12) with respect to the shifting means. Such regulating system has a flat bar (16) supported on the cross-member which includes a window or mounting hole (160) through which a pin (15) can be slid where the axis of the cutting blade (12) is located.

As can be seen in further detail in Figure 2, the shifting means present in the cutting station (11) comprise a plurality of vacuum belts (17) supported on a bedplate (25) formed by multiple profiles. The vacuum belts (17) are oriented in the forward movement direction (F), which coincides with the longitudinal axis (LC) of the cutting station (11). In this case, each cutting blade (12) is located between two vacuum belts (17).

Additionally, the cutting station (11) includes a sheet ejector transfer located after the cutting means which allows discarding or inspecting those sheets (100) which may have a defect previously detected in the digital printing station (not depicted), after the cutting operation has been performed.

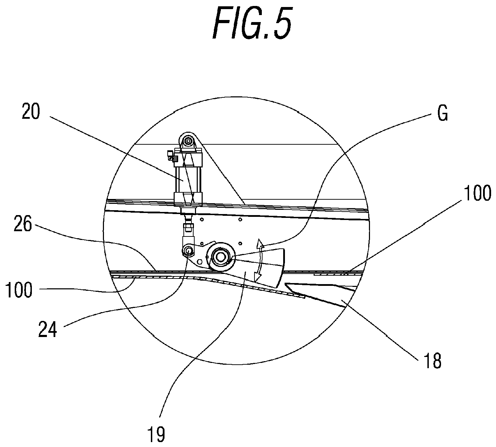

In this embodiment, the ejector transfer comprises a plurality of conveyor belts (26) arranged longitudinally located above the passage of the sheets (100), acting by vacuum for the support and shifting of such sheets (100). Each of the conveyor belts (26) is supported on a pair of cylindrical bodies (27), with one of them being motor-driven via drive means (28). The ejector transfer includes a downwardly inclined ejection ramp (18) which is located below the conveyor belts (26). Furthermore, a diverter mechanism is provided which has rotatably articulated ejectors (19) linked to the ejection ramp (18) and the conveyor belt, the movement of which is depicted with the arrow (G) in Figure 5. The plurality of conveyor belts (26) acting by suction are separated from one another, defining a separation space between them, in which space the ejectors (19) are arranged.

Therefore, in a first position of the ejector (19) it allows the passage of the sheets (100) on a horizontal plane, whereas in a second position of the ejector (19) which is turned with respect to the first position, it forces the sheets to be diverted in a downward direction towards the ejection ramp (18).

Therefore, when the ejector (19) is a horizontal arrangement the laminar sheet follows a path towards the outlet, whereas in the case of discarding a laminar sheet (100), the ejector (19) turns with the aid of a shaft (24) (see Figure 5) defining a path with a downward inclination towards the outlet or ejection ramps (18). The already cut sheets (100) which are separated are next placed on an additional bedplate (21) located below the cutting means, being furthermore provided with a conveyor belt transferring such defective sheets to an adjacent table (22), said table (22) including a segment provided with a plurality of rollers on which the sheet (100) can slide.

The details, shapes, dimensions and other complementary elements used in the manufacturing the cutting machine of the invention may be suitably replaced with others that do not depart from the scope defined by the claims below.

## Claims

1. A cutting machine for cutting cardboard, paper or the like, **characterised by** the fact that it comprises:
- an aligning station (1) having a horizontal bedplate provided with sheet shifting means and stop means arranged along the forward movement direction of the sheet and configured for being in contact with one of the sides of the sheet for guiding the movement for shifting the sheet;
- a cutting station (11) provided with cutting means arranged in a transverse direction with respect to the forward movement direction (F) of the sheets (100) for dividing the sheets into longitudinal sections, and sheet shifting means for shifting the sheets in the forward movement direction which coincides with a longitudinal axis of the cutting station (11), said cutting means being provided for dividing each sheet (100) into portions,
wherein a longitudinal axis of the bedplate (2) of the aligning station has, when seen in plan view, an angle of inclination with respect to the longitudinal axis of the cutting station.

2. The cutting machine according to claim 1, **characterised by** the fact that the cutting means comprise a plurality of motor-driven circular cutting blades (12) spaced from one another and arranged in cantilever fashion on a support structure (14).

3. The cutting machine according to claim 1, **characterised by** the fact that the shifting means present in the cutting station comprise a plurality of vacuum belts oriented in a forward movement direction (F) which coincides with the longitudinal axis of the cutting station.

4. The cutting machine according to any of claims 2 to 3, **characterised by** the fact that each cutting blade (12) is located between two vacuum belts.

5. The cutting machine according to claim 2, **characterised by** the fact that each of the cutting blades includes a tilting system configured following an upward/downward vertical movement of the cutting blade (12).

6. The cutting machine according to claim 1, **characterised by** the fact that the cutting station includes a sheet ejector transfer located after the cutting means.

7. The cutting machine according to claim 6, **characterised by** the fact that the ejector transfer comprises at least one longitudinally arranged vacuum conveyor belt located above the passage of the sheets (100), a downwardly inclined ejection ramp located below the conveyor belt and a diverter mechanism having at least one rotatably articulated ejector (19) linked with the ejection ramp (18) and the conveyor belt, such that in a first position of the ejector it allows the passage of the sheets on a horizontal plane, whereas in a second position of the ejector the sheets are directed towards the ejection ramp (18).

8. The cutting machine according to claim 7, **characterised by** the fact that it comprises a plurality of conveyor belts (26) acting by vacuum separated from one another, defining a separation space between them, in which space the ejectors (19) are arranged.

9. The cutting machine according to claim 1, **characterised by** the fact that the sheet shifting means present in the aligning station comprise a motor-driven air vacuum conveyor belt (3) assembled on the bedplate, the conveyor belt having a plurality of through holes through which the vacuum action is carried out.

10. The cutting machine according to any of the preceding claims, **characterised by** the fact that the bedplate of the aligning station is assembled on a movable guiding system which allows the shifting of the bedplate (2) in a transverse direction with respect to the forward movement direction of the sheet being shifted by the bedplate (2).

11. The cutting machine according to claim 10, **characterised by** the fact that the guiding system comprises at least one rail (7) on which rolling means provided in the lower part of the bedplate (2) can slide.

12. The cutting machine according to claim 1, **characterised by** the fact that the stop means comprises a fixed elongated barrier (6) fixed which is axially aligned with the forward movement direction of the sheets (100).

13. A digital printing line for printing sheets of cardboard, paper or the like, comprising a digital printing station configured for printing, using digital technique, at least one of the sides of the sheet, **characterised by** the fact that it includes a cutting machine according to any of claims 1 to 12 after the digital printing station in a forward movement direction, such that once a sheet has been printed on, it immediately passes through the aligning station and the cutting station.

14. The digital printing line according to claim 13, **characterised by** the fact that a longitudinal axis of the digital printing station is inclined with respect to the longitudinal axis of the aligning station.
